# EUROPEAN PATENT SPECIFICATION

(11) **EP 4 063 243 B1**
(45) Date of publication and mention of the grant of the patent: **06.05.2026**
(21) Application number: 21164503.1
(22) Date of filing: 24.03.2021
(51) Int. Cl.: B62D 53/06, B60P 3/00, B62D 13/04

(54) **INLOADER TRAILER**
INNENLADERANHÄNGER
REMORQUE À CHARGEUR D'INTÉRIEUR

(43) Date of publication of application: 28.09.2022
(73) Proprietor: MTDK A/S, 8940 Randers SV (DK)
(72) Inventor: Tang, Morten, 8870 Langå (DK)
(74) Representative: Andreasen, Søren Laursen Vasegaard

(56) References cited:
- EP-A1- 0 834 440
- EP-A1- 1 577 159
- EP-A1- 2 894 082
- EP-A1- 3 299 260
- EP-A1- 3 441 288
- WO-A2-2019/012045
- CN-A- 107 244 353
- DE-A1- 2 219 447

## Description

### Field of invention

The present invention relates to an inloader trailer having two or more pairs of ground engaging wheels.

### Prior art

Inloader trucks are used for transporting structures as flat pallets, glass packages (e.g. panes of glass) and prefabricated concrete parts. A typical inloader truck comprises a chassis having two longitudinal members extending parallel to each other and being connected at one end by a connection structure such as a cross member. Two or more pairs of ground engaging wheels are typically rotatably attached to the chassis hereby enabling the trailer to be towed by a truck. The truck is equipped with a fifth-wheel configured to be connected to the kingpin of the inloader trailer. It is, however, difficult to drive the trailer around a sharp curve. When the trailer is very long, it can be impossible to drive the trailer around a sharp curve.

EP 3 299 260 A1 discloses an inloader trailer comprising a chassis having a front portion and two longitudinal members extending parallel to each other and being connected at the front portion by a connection portion. The chassis comprises a plurality of pairs of rotatably mounted ground engaging wheels that are turnably arranged by means of a steering assembly that configured to change the driving direction of the turnably arranged wheels. The steering assembly of each of the turnably wheels are, however, designed in a manner that takes up a lot of space. Therefore, the inloader trailer is not suitable for transporting wide objects and at the same time complying with the road traffic regulations in many countries.

Thus, there is a need for an inloader trailer which reduces or even eliminates the above-mentioned disadvantages of the prior art.

### Summary of the invention

The object of the present invention can be achieved by an inloader trailer as defined in claim 1. Preferred embodiments are defined in the dependent subclaims, explained in the following description and illustrated in the accompanying drawings.

The inloader trailer according to the invention is an inloader trailer having a longitudinal axis and comprising a chassis having a front portion and two longitudinal members extending parallel to each other and being connected at the front portion by a connection portion, wherein the chassis comprises one or more pairs of rotatably mounted ground engaging wheels, wherein the wheels of each pair of wheel pair are rotatably mounted on different non-connected mounting structures, wherein the mounting structures are not directly connected so that a space without connection structures connecting the wheel pairs extends between the wheels of each pair, wherein the inloader trailer comprises a kingpin arranged at the front portion, wherein one or more of the pairs of wheels are turnably arranged by means of a steering assembly that is arranged and configured to actively change the driving direction of the turnably arranged wheels by rotating (and hereby turning) the turnably arranged wheels about a basically vertical axis so that the driving direction of the turnably arranged wheels differs from the direction of the longitudinal axis of the inloader trailer, wherein the steering assembly of each of the turnably arranged wheels is arranged above the turnably arranged wheel, wherein the steering assembly comprises:
- a steering spindle,
- an arm portion that is attached to the steering spindle and
- an actuator that is arranged and configured to rotate the steering spindle about its longitudinal axis that corresponds to its rotational axis.

Hereby, it is possible to drive the trailer around a sharp curve and transport wide standard elements having a width up to 150 cm.

By the term "turnably arranged" is meant that the turnably arranged wheels are arranged in such a manner that the driving direction of the turnably arranged wheels can be changed by rotating the turnably arranged wheels about a basically vertical axis so that the driving direction of the turnably arranged wheels differs from the driving direction of the inloader trailer.

By the term "actively change" is meant that the steering assembly actively changes the driving direction of the turnably arranged wheels by rotation. This means that the steering assembly comprises a structure that generates a force that changes the driving direction.

In one embodiment, the inloader trailer comprises two pairs of rotatably mounted ground engaging wheels.

In one embodiment, the inloader trailer comprises three pairs of rotatably mounted ground engaging wheels.

In one embodiment, the inloader trailer comprises four pairs of rotatably mounted ground engaging wheels.

Since the wheels of each pair of wheel pair are rotatably mounted on different non-connected mounting structures a space without connection structures extends between the wheels of each pair. Hereby, it is possible to load the inloader trailer with flat pallets, glass packages (e.g. panes of glass) and prefabricated concrete parts.

By having one or more pairs of wheels that are turnably arranged by means of a steering assembly that is arranged and configured to change the driving direction of the turnably arranged wheels by rotating (and hereby turning) the turnably arranged wheels about a basically vertical axis it is possible to change the driving direction of the turnably arranged wheels. This means that the driving direction of the turnably arranged wheels differs from the direction of the longitudinal axis of the inloader trailer when the turnably mounted wheels are turned. Accordingly, the invention makes it possible to steer the inloader trailer.

In several states an inloader trailer that comprises four pairs of rotatably mounted ground engaging wheels is only permitted to drive on public roads if at least one of the pairs of rotatably mounted ground engaging wheels are turnably arranged.

In one embodiment, each of the turnably arranged wheels are attached to the chassis by means of its own steering assembly, wherein each steering assembly comprises an actuator arranged to turn the turnably arranged wheel.

Hereby, it is possible to control the turning of each of the turnably mounted wheels individually.

In one embodiment, the inloader trailer comprises a control unit arranged and configured to control the actuator on the basis of one or more sensor signals.

Hereby, it is possible to control the turning of the turnably mounted wheels on sensor measurements (preferably directional measurements).

In one embodiment, the inloader trailer comprises a sensor arranged and configured to detect the angle between a towing truck (when the towing truck is towing the inloader trailer) and the inloader trailer.

Hereby, the inloader trailer can be controlled in a manner in which the turning of the inloader trailer is controlled on the basis of the turning and trajectory of the truck towing the inloader trailer. This is a major advantage and makes it possible to drive faster when turning.

In one embodiment, the sensor (that is configured to detect the angle between a towing truck and the inloader trailer) is arranged at the kingpin.

In one embodiment, the inloader trailer comprises a sensor arranged and configured to detect the angle between the driving direction of the turnably mounted wheel and the direction of the longitudinal axis of the inloader trailer. Hereby, it is possible to detect how much the turnable wheels are turned. Accordingly, this sensor is capable of giving "feedback" so that it is verified if the turning is sufficient, too small or too large.

In one embodiment, the control unit is configured to synchronise the turning of each wheel of the one or more pairs of turnable wheels.

By the term "synchronise" is meant that the corresponding wheels of a wheel pair are turned at the same time by using the control unit. Hereby, the control unit is configured to control the actuators in such a manner that the actuators rotate the corresponding wheels of a pair of wheels with the same angle. Hereby, it is meant that the corresponding wheels of a wheel pair is exposed to the same angular displacement.

In one embodiment, the actuator is hydraulically driven.

In one embodiment, the actuator is electrically driven.

In one embodiment, each of the turnably arranged wheels of the pairs of wheels are mounted on an elongated mounting structure that is mechanically connected to a rotatably mounted upright steering spindle that is attached to an arm portion, wherein an actuator is arranged to rotate the steering spindle about its vertical axis of rotation.

In one embodiment, the inloader trailer comprises a hydraulic lock configured to maintain the driving direction of the turnably mounted wheels parallel to the longitudinal axis of the inloader trailer for velocities above a predefined level (V₁).

Hereby, it is possible to avoid that the turnably mounted wheels are turned when the speed of the inloader trailer exceeds the predefined level.

In a preferred embodiment, the hydraulic lock is supplied with hydraulic oil from a first hydraulic system that is separated from a second hydraulic system, from which hydraulic oil is supplied to a hydraulic actuator turning the turnably mounted wheels.

In one embodiment, the hydraulic lock is configured to lock the actuator in a position, in which the driving direction of the turnably mounted wheels extend parallel to the longitudinal axis of the inloader trailer.

In one embodiment, the predefined level is in the range 30-60 km/h.

In one embodiment, the predefined level is in the range 40-50 km/h.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a side view of an inloader trailer according to the invention;
- Fig. 1B: shows a top view of the inloader trailer shown in Fig. 1A;
- Fig. 2A: shows a schematic view of a pair of wheels of a prior art inloader trailer;
- Fig. 2B: shows a schematic view of the left wheel of a pair of turnably arranged wheels of an inloader trailer according to the invention;
- Fig. 2C: shows a schematic view of the left wheel shown in Fig. 2B in another configuration (making a left turn);
- Fig. 3A: shows a perspective top view of an inloader trailer according to the invention;
- Fig. 3B: shows a schematic view of the steering assembly of the left wheel of a pair of turnably arranged wheels of an inloader trailer according to the invention;
- Fig. 4: shows a perspective side view of components of an inloader according to the invention;
- Fig. 5: shows a top view of the inloader trailer shown in Fig. 4;
- Fig. 6A: shows a perspective side view of a steering assembly of an inloader according to the invention;
- Fig. 6B: shows a top view of the steering assembly shown in Fig. 6A;
- Fig. 7A: shows a side view of an inloader trailer according to the invention and
- Fig. 7B: shows a top view of the inloader trailer shown in Fig. 7A.

### Detailed description of the invention

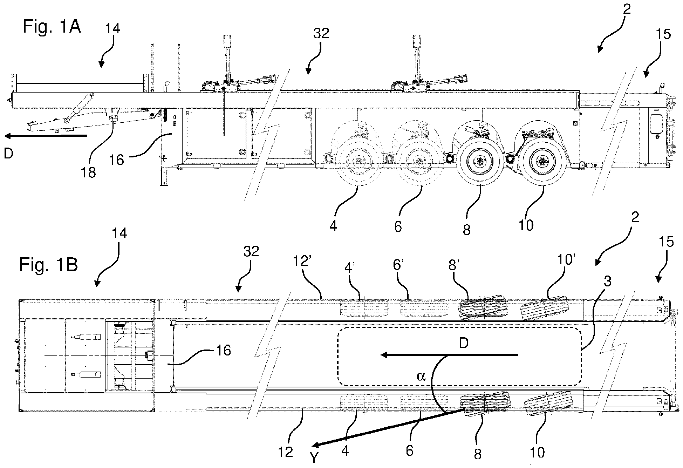

Referring now in detail to the drawings for the purpose of illustrating preferred embodiments of the present invention, a side view of an inloader trailer 2 of the present invention is illustrated in Fig. 1A.

Fig. 1A illustrates a schematic side view of an inloader trailer 2 according to the invention. Fig. 1B illustrates a top view of the inloader trailer 2 shown in Fig. 1A.

The inloader trailer 2 has a longitudinal axis D indicated by an arrow. The inloader trailer 2 comprises a chassis 32 having a front portion 14 and a rear portion 15. The chassis 32 comprises two longitudinal members 12, 12' (a left longitudinal member 12 and a right longitudinal member 12') extending parallel to each other and being connected at the front portion 14 by a connection portion 16. The longitudinal members 12, 12' extend parallel to the longitudinal axis D. The longitudinal members 12, 12' are spaced apart. Accordingly, a space 3 is provided between the longitudinal members 12, 12'.

The chassis 32 comprises four pairs of rotatably mounted ground engaging wheels 4, 4', 6, 6', 8, 8', 10, 10'.

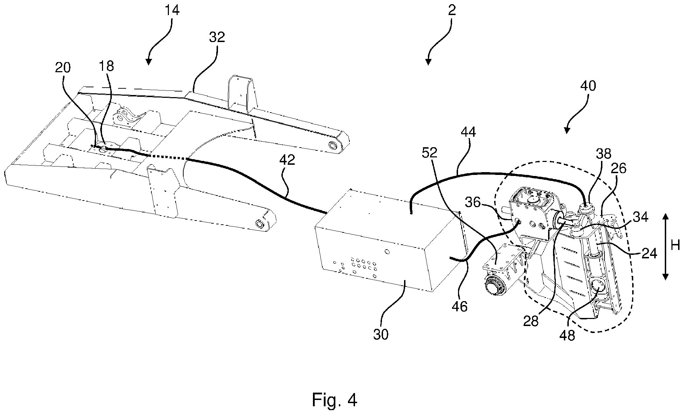

Each of the four (two pairs) foremost wheels 4, 4', 6, 6' are rotatably mounted but not turnably mounted to the chassis 32. Each of the four (two pairs) rearmost wheels 8, 8', 10, 10', however, are turnably arranged by means of a steering assembly (see Fig. 4, Fig. 5, Fig. 6A and Fig. 6B).

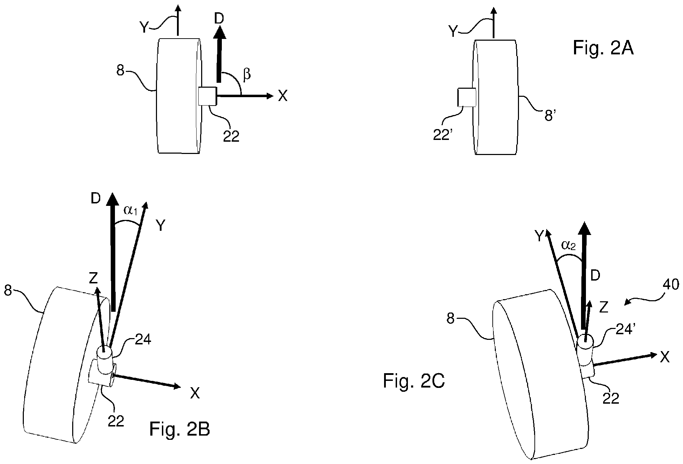

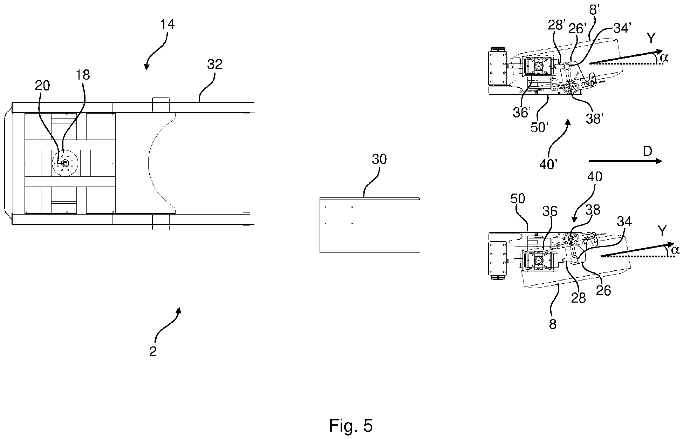

Accordingly, each of these four wheels 8, 8', 10, 10' comprises its own steering assembly. Each steering assembly is arranged and configured to change the driving direction (see Fig. 2B, Fig. 2C or Fig. 5) of the turnably arranged wheel 8, 8', 10, 10' by rotating the turnably arranged wheel 8, 8', 10, 10' about a basically vertical axis so that the driving direction of the turnably arranged wheel 8, 8', 10, 10' differs from the direction of the longitudinal axis D of the inloader trailer 2. In Fig. 1B it can be seen that the angle α between the direction Y of the turnably arranged wheel 8, 8', 10, 10' and the longitudinal axis D of the inloader trailer 2 is about 17 degrees.

No connection structures extend between the wheels 4, 6, 8, 10 of the left longitudinal member 12 and the wheels 4', 6', 8', 10' of the right longitudinal member 12'. Accordingly, it is not possible to steer each of these wheels individually as shown in Fig. 2B, Fig. 2C and Fig. 5.

The inloader trailer 2 comprises a kingpin 18 arranged at the front portion 14 of the inloader trailer 2. The kingpin 18 enables the inloader trailer 2 to be towed by a truck equipped with a fifth-wheel configured to be connected to the kingpin 18 of the inloader trailer 2.

Due to the size of prior art inloader trailers, it is difficult to drive a prior art inloader trailer around a sharp curve. When the trailer is very long, it can be impossible to drive the trailer around a sharp curve. Due to the steering assembly used by each of the turnably mounted wheels of the inloader trailer 2 according to the invention, it is possible to drive around a sharper curve than with the prior art inloader trailers.

By the term "turnably arranged" is meant that the turnably arranged wheels are arranged in such a manner that the driving direction Y of the turnably arranged wheel 8, 8', 10, 10' can be changed by rotating the turnably arranged wheel 8, 8', 10, 10' about a basically vertical axis so that the driving direction Y of the turnably arranged wheel 8, 8', 10, 10' differs from the direction of the longitudinal axis D of the inloader trailer 2.

Fig. 2A illustrates a schematic top view of a pair of wheels 8, 8' of a prior art inloader trailer. Each of the wheels 8, 8' has a driving direction Y and is rotatably attached to a mounting structure 22, 22' that is fixed to the chassis (not shown) of the inloader trailer. This means that the wheels 8, 8' are fixed in such a manner that their driving direction Y extends parallel to the longitudinal axis D of the inloader trailer. The angle β between the longitudinal axis D and the longitudinal axis X of the mounting structure 22 is indicated in Fig. 2A. It can be seen that the angle β between the longitudinal axis D and the longitudinal axis X of the mounting structure 22 is 90 degrees.

Fig. 2B illustrates a schematic view of the left wheel 8 of a pair of turnably arranged wheels of an inloader trailer according to the invention. The wheel 8 has a driving direction Y that differs from the direction of the longitudinal axis D of the inloader trailer. Accordingly, the inloader trailer will turn to the left. The angle α₁ between the driving direction Y and the direction of the longitudinal axis D of the inloader trailer is indicated.

The wheel 8 is rotatably attached to a mounting structure 22 that is turnably attached to the chassis (not shown) of the inloader trailer. A steering spindle 24 is mechanically attached to and extends upwardly from the mounting structure 22. The mounting structure 22 has a longitudinal axis X that extends perpendicular to the direction of the longitudinal axis D of the inloader trailer.

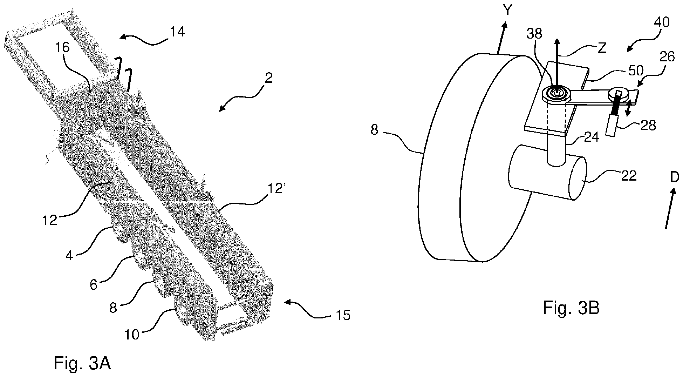

The steering spindle 24 is arranged and configured to allow the wheel 8 to be turned by rotating the steering spindle 24 about the longitudinal axis Z of the steering spindle 24 (this is shown and explained with reference to Fig. 3B, Fig. 4, Fig. 5, Fig. 6A and Fig. 6B). Although it is not shown, the attachment of the wheel 8 to the mounting structure 22 may be done by using a bearing or another structure that would be advantageous and known for the person skilled in the art.

Fig. 2C illustrates a schematic view of the left wheel shown in Fig. 2B in another configuration, in which the inloader trailer is making a left turn.

The wheel 8 has a driving direction Y that differs from the direction of the longitudinal axis D of the inloader trailer. Accordingly, the inloader trailer will turn to the right. The angle α₂ between the driving direction Y and the direction of the longitudinal axis D of the inloader trailer is indicated.

Fig. 3A illustrates a perspective top view of an inloader trailer 2 according to the invention. The inloader trailer 2 comprises a chassis equipped with a front portion 14. The chassis comprises two longitudinal members 12, 12' extending parallel to each other and being connected at the front portion 14 by a connection portion 16 extending between the two longitudinal members 12, 12'.

The inloader trailer 2 comprises four pairs of rotatably mounted ground engaging wheels 4, 6, 8, 10. The two rearmost pairs of wheels 8, 10 are turnably arranged by means of a steering assembly that is arranged and configured to change the driving direction of the turnably arranged wheels 8, 10 by rotating the turnably arranged wheels 8, 10 about a vertical axis in such a manner that the driving direction of the turnably arranged wheels 8, 10 differs from the direction of the longitudinal axis of the inloader trailer 2.

Fig. 3B illustrates a schematic view of the steering assembly 40 of the left wheel 8 of a pair of turnably arranged wheels of an inloader trailer according to the invention. The wheel 8 is rotatably attached to a mounting structure 22. A steering spindle 24 is attached to the mounting structure 22. The steering spindle 24 extends perpendicular to the longitudinal axis of the mounting structure 22 and protrudes upwards therefrom. The steering spindle 24 is rotatably attached to a fixed structure 50 that is attached to the chassis by means of an attachment assembly (not shown).

The steering assembly 40 comprises an arm portion 26 that is attached to the steering spindle 24. The steering assembly 40 comprises an actuator 28 that is arranged and configured to rotate the steering spindle 24 about its longitudinal axis Z that corresponds to its rotational axis. Hereby, it is possible to turn the wheel 8. In one embodiment, the actuator 28 is hydraulically driven.

The steering assembly 40 comprises a sensor 38 arranged and configured to determine the angle between the driving direction Y of the wheel 8 and the direction of the longitudinal axis D of the inloader trailer. The actuator 28 is controlled by a control unit (not shown) on the basis of one or more control signals. In one embodiment, the actuator 28 is controlled on the basis of one or more control signals from a sensor arranged at the kingpin to detect the angle between the towing truck and the inloader trailer.

Fig. 4 illustrates a perspective side view of components of an inloader 2 according to the invention. The inloader trailer 2 corresponds to the one shown in Fig. 1A, Fig. 1B and Fig. 3A, however, some components have been removed in order to provide a better illustration of the remaining components.

The inloader trailer 2 comprises a control unit 30 that is connected to a sensor 20 by means of a wired connection 42. The sensor 20 is arranged and configured to detect the angle between the towing truck (not shown) and the (longitudinal axis of the) inloader trailer 2. The sensor 20 is arranged at the kingpin 18 at the front portion 14 of the chassis 32 of the inloader trailer 2.

The inloader trailer 2 comprises a steering assembly 40 by means of which the corresponding turnably mounted wheel (not shown) is mounted to the chassis 32. The steering assembly 40 comprises an actuator 28 arranged in a housing 36 that is mechanically connected to a part of the chassis 32 that is not visible in Fig. 4. The actuator 28 is a hydraulic actuator (a hydraulic cylinder) 28 that, at the distal end, is attached to a protruding member 34 of an arm portion 26 that is attached to a rotatably mounted steering spindle 24. The steering spindle 24 is attached to a receiving structure 48 at its free end. The receiving structure 48 is arranged and configured to receive a mounting structure (not shown), by which the turnably mounted wheel can be attached to the steering assembly 40.

The steering assembly 40 comprises a sensor 38 arranged and configured to determine the angle between the driving direction of the wheel (not shown) and the direction of the longitudinal axis of the inloader trailer 2. The control unit 30 receives signals detected by the sensor 38 via the wired connection 44.

The actuator 28 is controlled by the control unit 30 on the basis of the control signals received from the sensor 20 at the kingpin 18 and control signals from the sensor 38 arranged at the steering spindle 24. The control unit 30 is connected to the actuator by means of a hydraulic connection 46. In one embodiment, the control unit 30 comprises or is in fluid communication with a hydraulic pressure source. Hereby, the control unit 30 can control the actuator 28 via the hydraulic connection 46.

The sensor 38 is used to ensure that the rotational displacement caused by the activation of the actuator 28 corresponds to the rotational displacement of the inloader trailer 2 detected by the sensor 20 at the kingpin 18. In this manner the actuator 28 receives "feedback signals" from the sensor 38 arranged at the steering spindle 24.

The sensors 20, 38 may be of any suitable types as long as they can detect the angular position of the inloader trailer 2 relative to the towing truck and the angular position of the wheel relative to the longitudinal axis of the inloader trailer 2, respectively.

Accordingly, in one embodiment, the actuator 28 is controlled on the basis of one or more control signals from a sensor arranged at the kingpin to detect the angle between the towing truck and the inloader trailer.

Each of the wired connections 42, 44 may be replaced by a wireless connection comprising a transmitter and a receiver.

In a preferred embodiment, the vertical position H of the steering assembly 40 can be regulated by means of a regulation assembly (not shown). The attachment structure 52 is arranged and configured to be attached to the chassis of the inloader trailer. Hereby, the vertical position of the steering assembly 40 relative to the attachment structure 52 (and thus the chassis) can be regulated.

Fig. 5 illustrates a top view of the inloader trailer 2 that basically corresponds to the one shown in Fig. 4. The connections between the sensors and the control unit are, however, not shown in Fig. 5.

The inloader trailer 2 comprises a pair of turnably mounted wheels 8, 8'. Each of these wheels 8, 8' are attached to the chassis 32 by means of a steering assembly 40, 40'. Each steering assembly 40, 40' comprises a fixed structure 50, 50' that is attached to the chassis 32 by means of an attachment structure (not shown). Each steering assembly 40, 40' comprises an actuator 28, 28' arranged in a housing 36, 36'. The distal portion of the actuator 28, 28' is fixed to a protruding member of a rotatably mounted arm portion 26, 26' that is attached to the steering spindle (as shown in Fig. 4). An angular sensor 38, 38' is arranged at the top portion of the steering spindle to detect the angle α between the driving direction Y of the wheels 8, 8' and the direction of the longitudinal axis D of the chassis 32.

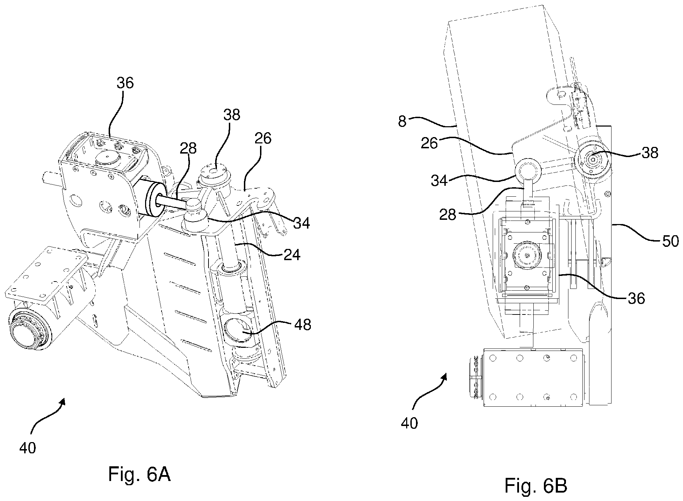

Fig. 6A illustrates a perspective side view of a steering assembly 40 corresponding to the one shown in Fig. 4.

Fig. 6B illustrates a top view of the steering assembly 40 shown in Fig. 6A.

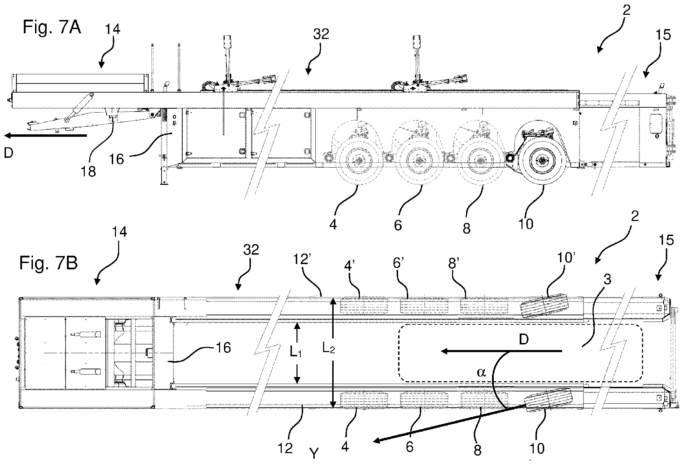

Fig. 7A illustrates a side view of an inloader trailer 2 according to the invention. Fig. 7B illustrates a top view of the inloader trailer 2 shown in Fig. 7A. The inloader trailer 2 basically corresponds to the inloader trailer shown in Fig. 1A. On the inloader trailer 2 illustrated in Fig. 7A and Fig. 7B, however, only the rearmost wheels 10, 10', are turnably arranged by means of a steering assembly (as the one shown in and explained with reference to Fig. 4, Fig. 5, Fig. 6A and Fig. 6B).

The inner width L₁ and the outer width L₂ of the inloader trailer 2 are indicated in Fig. 7B. In a preferred embodiment, the inner width L₁ is approximately 150 cm. In a preferred embodiment, the outer width L₂ is not more than 255 cm. Hereby, the inloader trailer complies with the road traffic regulations in many countries. Due to these restrictions with respect to the outer width L₂ of the inloader trailer, there is very little space available to arrange a steering assembly. The invention successfully solves the problem of providing a steering assembly that can be applied in an inloader trailer, in which the inner width L₁ is 150 cm and the outer width L₂ is 255 cm.

### List of reference numerals

- 2: Inloader trailer
- 3: Space
- 4, 6: Ground engaging wheels
- 8, 8', 10, 10': Turnably mounted ground engaging wheels
- 12, 12': Longitudinal member
- 14: Front portion
- 15: Rear portion
- 16: Connection portion
- 18: Kingpin
- 20: Sensor
- 22, 22': Mounting structure
- 24: Steering spindle
- 26, 26': Arm portion
- 28, 28': Actuator
- 30: Control unit
- 32: Chassis
- 34, 34': Protruding member
- 36, 36': Housing
- 38, 38': Sensor
- 40, 40': Steering assembly
- 42, 44, 46: Connection
- 48: Receiving structure
- 50, 50': Fixed structure
- 52: Attachment structure
- V₁: Predefined level
- X, Y, Z: Axis
- D: Longitudinal axis
- α, α₁, α₂, β: Angle
- H: Vertical position
- W₁, W₂: Width

## Claims

1. An inloader trailer (2) having a longitudinal axis (D) and comprising a chassis (32) having a front portion (14) and two longitudinal members (12, 12') extending parallel to each other and being connected at the front portion (14) by a connection portion (16), wherein the chassis (32) comprises one or more pairs of rotatably mounted ground engaging wheels (4, 6, 8, 10), wherein the wheels of each pair of wheel pair are rotatably mounted on different non-connected mounting structures (22, 22'), wherein the mounting structures (22, 22') are not directly connected so that a space (3) without connection structures connecting the wheel pairs extends between the wheels (4, 6, 8, 10) of each pair, wherein the inloader trailer (2) comprises a kingpin (18) arranged at the front portion (14), wherein one or more of the pairs of wheels (8, 8', 10, 10') are turnably arranged by means of a steering assembly (40, 40') that is arranged and configured to actively change the driving direction (Y) of the turnably arranged wheels (8, 8', 10, 10') by rotating (and hereby turning) the turnably arranged wheels (8, 8', 10, 10') about a basically vertical axis so that the driving direction (Y) of the turnably arranged wheels (8, 8', 10, 10') differs from the direction of the longitudinal axis (D) of the inloader trailer (2), **characterised in that** the that the steering assembly (40, 40') of each of the turnably arranged wheels (8, 8', 10, 10') is arranged above the turnably arranged wheel (8, 8', 10, 10'), wherein the steering assembly (40, 40') comprises:
- a steering spindle (24),
- an arm portion (26) that is attached to the steering spindle (24) and
- an actuator (28) that is arranged and configured to rotate the steering spindle (24) about its longitudinal axis (Z) that corresponds to its rotational axis.

2. An inloader trailer (2) according to claim 1, **characterised in that** each of the turnably arranged wheels (8, 8', 10, 10') are attached to the chassis (32) by means of its own steering assembly (40, 40'), wherein each steering assembly (40, 40') comprises an actuator (28, 28') arranged to turn the turnably arranged wheel (8, 8', 10, 10').

3. An inloader trailer (2) according to claim 2, **characterised in that** the inloader trailer (2) comprises a control unit (30) arranged and configured to control the actuator (28, 28') on the basis of one or more sensor signals.

4. An inloader trailer (2) according to claim 3, **characterised in that** the inloader trailer (2) comprises a sensor (20) arranged and configured to detect the angle between a towing truck (when the towing truck is towing the inloader trailer) and the inloader trailer (2).

5. An inloader trailer (2) according to claim 4, **characterised in that** the sensor (20) is arranged at the kingpin (18).

6. An inloader trailer (2) according to claim 3, **characterised in that** the inloader trailer (2) comprises a sensor (38) arranged and configured to detect the angle (α) between the driving direction (Y) of the turnably mounted wheel (8, 8', 10, 10') and the direction of the longitudinal axis (D) of the inloader trailer (2).

7. An inloader trailer (2) according to one of the preceding claims, **characterised in that** the control unit (30) is configured to synchronise the turning of each wheel of the one or more pairs of turnable wheels (8, 8', 10, 10').

8. An inloader trailer (2) according to one of the claims 2-7, **characterised in that** the actuator (28, 28') is hydraulically driven.

9. An inloader trailer (2) according to one of the claims 2-7, **characterised in that** the actuator (28, 28') is electrically driven.

10. An inloader trailer (2) according to one of the preceding claims, **characterised in that** each of the turnably arranged wheels of the pairs of wheels (8, 8', 10, 10') are mounted on an elongated mounting structure (22, 22') that is mechanically connected to a rotatably mounted upright steering spindle (24, 24') that is attached to an arm portion (26, 26'), wherein an actuator (28, 28') is arranged to rotate the steering spindle (24, 24') about its vertical axis of rotation (Z).

11. An inloader trailer (2) according to one of the preceding claims, **characterised in that** the inloader trailer (2) comprises a hydraulic lock configured to maintain the driving direction (Y) of the turnably mounted wheels (8, 8', 10, 10') parallel to the longitudinal axis (D) of the inloader trailer (2) for velocities above a predefined level (V₁).

## Patentansprüche

1. Innenladeranhänger (2), der eine Längsachse (D) aufweist und ein Fahrgestell (32) umfasst, das einen Vorderabschnitt (14) und zwei parallel zueinander verlaufende Längsträger (12, 12') aufweist, die am Vorderabschnitt (14) durch ein Verbindungsstück (16) miteinander verbunden sind, wobei das Fahrgestell (32) ein oder mehrere Paare drehbar gelagerter, bodenberührender Räder (4, 6, 8, 10) umfasst, wobei die Räder jedes Paares eines Radpaares drehbar auf unterschiedlichen, nicht miteinander verbundenen Lagerstrukturen (22, 22') gelagert sind, wobei die Lagerstrukturen (22, 22') nicht direkt miteinander verbunden sind, sodass sich zwischen den Rädern (4, 6, 8, 10) jedes Paares ein Raum (3) ohne Verbindungsstrukturen, die die Radpaare miteinander verbinden, erstreckt, wobei der Innenladeranhänger (2) einen am Vorderabschnitt (14) angeordneten Königszapfen (18) umfasst, wobei ein oder mehrere der Radpaare (8, 8', 10, 10') mittels einer Lenkanordnung (40, 40') drehbar angeordnet sind, die so angeordnet und konfiguriert ist, dass sie die Fahrtrichtung (Y) der drehbar angeordneten Räder (8, 8', 10, 10') aktiv ändert, indem sie die drehbar angeordneten Räder (8, 8', 10, 10') um eine im Wesentlichen vertikale Achse dreht (und dadurch umdreht), sodass die Fahrtrichtung (Y) der drehbar angeordneten Räder (8, 8', 10, 10') von der Richtung der Längsachse (D) des Innenladeranhängers (2) abweicht, **dadurch gekennzeichnet, dass** die Lenkanordnung (40, 40') jedes der drehbar angeordneten Räder (8, 8', 10, 10') oberhalb des drehbar angeordneten Rades (8, 8', 10, 10') angeordnet ist, wobei die Lenkanordnung (40, 40') Folgendes umfasst:
- eine Lenkspindel (24),
- einen Armabschnitt (26), der an der Lenkspindel (24) befestigt ist, und
- eine Betätigungsvorrichtung (28), die so angeordnet und konfiguriert ist, dass sie die Lenkspindel (24) um ihre Längsachse (Z) dreht, die ihrer Drehachse entspricht.

2. Innenladeranhänger (2) nach Anspruch 1, **dadurch gekennzeichnet, dass** jedes der drehbar angeordneten Räder (8, 8', 10, 10') mittels einer eigenen Lenkanordnung (40, 40') am Fahrgestell (32) befestigt ist, wobei jede Lenkanordnung (40, 40') eine Betätigungsvorrichtung (28, 28') umfasst, die zum Drehen des drehbar angeordneten Rades (8, 8', 10, 10') angeordnet ist.

3. Innenladeranhänger (2) nach Anspruch 2, **dadurch gekennzeichnet, dass** der Innenladeranhänger (2) eine Steuereinheit (30) umfasst, die so angeordnet und konfiguriert ist, dass sie die Betätigungsvorrichtung (28, 28') auf der Grundlage eines oder mehrerer Sensorsignale steuert.

4. Innenladeranhänger (2) nach Anspruch 3, **dadurch gekennzeichnet, dass** der Innenladeranhänger (2) einen Sensor (20) umfasst, der so angeordnet und konfiguriert ist, dass er den Winkel zwischen einem Zugfahrzeug (wenn das Zugfahrzeug den Innenladeranhänger zieht) und dem Innenladeranhänger (2) erfasst.

5. Innenladeranhänger (2) nach Anspruch 4, **dadurch gekennzeichnet, dass** der Sensor (20) am Königszapfen (18) angeordnet ist.

6. Innenladeranhänger (2) nach Anspruch 3, **dadurch gekennzeichnet, dass** der Innenladeranhänger (2) einen Sensor (38) umfasst, der so angeordnet und konfiguriert ist, dass er den Winkel (a) zwischen der Fahrtrichtung (Y) des drehbar gelagerten Rades (8, 8', 10, 10') und der Richtung der Längsachse (D) des Innenladeranhängers (2) erfasst.

7. Innenladeranhänger (2) nach einem der vorstehenden Ansprüche, **dadurch gekennzeichnet, dass** die Steuereinheit (30) so konfiguriert ist, dass sie die Drehung jedes Rades des einen oder der mehreren Paare von drehbaren Rädern (8, 8', 10, 10') synchronisiert.

8. Innenladeranhänger (2) nach einem der Ansprüche 2-7, **dadurch gekennzeichnet, dass** die Betätigungsvorrichtung (28, 28') hydraulisch angetrieben wird.

9. Innenladeranhänger (2) nach einem der Ansprüche 2-7, **dadurch gekennzeichnet, dass** die Betätigungsvorrichtung (28, 28') elektrisch angetrieben wird.

10. Innenladeranhänger (2) nach einem der vorstehenden Ansprüche, **dadurch gekennzeichnet, dass** jedes der drehbar angeordneten Räder der Radpaare (8, 8', 10, 10') auf einer länglichen Lagerstruktur (22, 22') gelagert ist, die mechanisch mit einer drehbar gelagerten, aufrechten Lenkspindel (24, 24') verbunden ist, welche an einem Armabschnitt (26, 26') befestigt ist, wobei eine Betätigungsvorrichtung (28, 28') so angeordnet ist, dass sie die Lenkspindel (24, 24') um ihre vertikale Drehachse (Z) dreht.

11. Innenladeranhänger (2) nach einem der vorstehenden Ansprüche, **dadurch gekennzeichnet, dass** der Innenladeranhänger (2) eine hydraulische Verriegelung umfasst, die so konfiguriert ist, dass sie die Fahrtrichtung (Y) der drehbar gelagerten Räder (8, 8', 10, 10') bei Geschwindigkeiten oberhalb eines vordefinierten Niveaus (V₁) parallel zur Längsachse (D) des Innenladeranhängers (2) hält.

## Revendications

1. Remorque de type inloader (2) présentant un axe longitudinal (D) et comprenant un châssis (32) doté d'une partie avant (14) et de deux longerons (12, 12') s'étendant parallèlement l'un à l'autre et reliés à la partie avant (14) par une pièce de liaison (16), dans laquelle le châssis (32) comprend une ou plusieurs paires de roues de contact au sol (4, 6, 8, 10) montées de manière rotative, dans laquelle les roues de chaque paire sont montées de manière rotative sur des structures de montage distinctes (22, 22'), dans laquelle les structures de montage (22, 22') ne sont pas directement reliées entre elles, de sorte qu'un espace (3) sans structure de raccordement reliant les paires de roues s'étend entre les roues (4, 6, 8, 10) de chaque paire, dans laquelle la remorque de type inloader (2) comprend un pivot d'attelage (18) situé à la partie avant (14), dans laquelle une ou plusieurs paires de roues (8, 8', 10, 10') sont agencées de manière pivotante grâce à un ensemble de direction (40, 40') qui est agencé et configuré pour modifier activement la direction de déplacement (Y) des roues pivotantes (8, 8', 10, 10') en faisant pivoter les roues pivotantes (8, 8', 10, 10') autour d'un axe sensiblement vertical, de sorte que la direction de déplacement (Y) des roues pivotantes (8, 8', 10, 10') diffère de la direction de l'axe longitudinal (D) de la remorque de type inloader (2), **caractérisée en ce que** l'ensemble de direction (40, 40') de chacune des roues pivotantes (8, 8', 10, 10') est agencé au-dessus de ladite roue pivotante (8, 8', 10, 10'), dans laquelle l'ensemble de direction (40, 40') comprend :
- une fusée de direction (24),
- une partie de bras (26) qui est fixée à la fusée de direction (24) et
- un actionneur (28) qui est agencé et configuré pour faire tourner la fusée de direction (24) autour de son axe longitudinal (Z) qui correspond à son axe de rotation.

2. Remorque de type inloader (2) selon la revendication 1, **caractérisée en ce que** chacune des roues pivotantes (8, 8', 10, 10') est fixée au châssis (32) au moyen de son propre ensemble de direction (40, 40'), dans laquelle chaque ensemble de direction (40, 40') comprend un actionneur (28, 28') agencé de façon à faire tourner la roue pivotante (8, 8', 10, 10').

3. Remorque de type inloader (2) selon la revendication 2, **caractérisée en ce que** la remorque de type inloader (2) comprend une unité de commande (30) agencée et configurée pour commander l'actionneur (28, 28') sur la base d'un ou plusieurs signaux de capteur.

4. Remorque de type inloader (2) selon la revendication 3, **caractérisée en ce que** la remorque de type inloader (2) comprend un capteur (20) agencé et configuré pour détecter l'angle entre un camion de remorquage (lorsque le camion de remorquage remorque la remorque de type inloader) et la remorque de type inloader (2).

5. Remorque de type inloader (2) selon la revendication 4, **caractérisée en ce que** le capteur (20) est agencé au niveau du pivot d'attelage (18).

6. Remorque de type inloader (2) selon la revendication 3, **caractérisée en ce que** la remorque de type inloader (2) comprend un capteur (38) agencé et configuré pour détecter l'angle (a) entre la direction de déplacement (Y) de la roue pivotante (8, 8', 10, 10') et la direction de l'axe longitudinal (D) de la remorque de type inloader (2).

7. Remorque de type inloader (2) selon l'une des revendications précédentes, **caractérisée en ce que** l'unité de commande (30) est configurée pour synchroniser la rotation de chaque roue de la ou des paires de roues pivotantes (8, 8', 10, 10').

8. Remorque de type inloader (2) selon l'une des revendications 2 à 7, **caractérisée en ce que** l'actionneur (28, 28') est entraîné hydrauliquement.

9. Remorque de type inloader (2) selon l'une des revendications 2 à 7, **caractérisée en ce que** l'actionneur (28, 28') est entraîné électriquement.

10. Remorque de type inloader (2) selon l'une des revendications précédentes, **caractérisée en ce que** chacune des roues pivotantes des paires de roues (8, 8', 10, 10') est montée sur une structure de montage allongée (22, 22') qui est mécaniquement reliée à une fusée de direction (24, 24') verticale montée de manière rotative qui est fixée à une partie de bras (26, 26'), dans laquelle un actionneur (28, 28') est disposé de façon à faire tourner la fusée de direction (24, 24') autour de son axe de rotation vertical (Z).

11. Remorque de type inloader (2) selon l'une des revendications précédentes, **caractérisée en ce que** la remorque de type inloader (2) comprend un verrou hydraulique configuré pour maintenir la direction de déplacement (Y) des roues pivotantes (8, 8', 10, 10') parallèle à l'axe longitudinal (D) de la remorque de type inloader (2) pour des vitesses supérieures à un niveau prédéfini (V₁).
